(19) Europäisches Patentamt
European Patent Office
Office européen des brevets

(11) **EP 2 304 334 B1**

(12) **EUROPÄISCHE PATENTSCHRIFT**

(45) Veröffentlichungstag und Bekanntmachung des Hinweises auf die Patenterteilung:
**01.07.2015 Patentblatt 2015/27**

(21) Anmeldenummer: **09726301.6**

(22) Anmeldetag: **29.03.2009**

(51) Int Cl.:
*F24J 2/07* (2006.01)     *F24J 2/14* (2006.01)
*F24J 2/18* (2006.01)

(86) Internationale Anmeldenummer:
**PCT/CH2009/000105**

(87) Internationale Veröffentlichungsnummer:
**WO 2009/117840 (01.10.2009 Gazette 2009/40)**

(54) **RINNENKOLLEKTOR FÜR EIN SOLARKRAFTWERK**

TROUGH COLLECTOR FOR A SOLAR POWER PLANT

CAPTEUR CYLINDRO-PARABOLIQUE POUR CENTRALE SOLAIRE

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **28.03.2008 CH 4622008**
**17.07.2008 CH 11132008**

(43) Veröffentlichungstag der Anmeldung:
**06.04.2011 Patentblatt 2011/14**

(73) Patentinhaber: **Airlight Energy IP SA**
**6710 Biasca (CH)**

(72) Erfinder: **PEDRETTI-RODI, Andrea**
**CH-6948 Porza (CH)**

(74) Vertreter: **Stump, Beat et al**
**Stump & Partner AG**
**Zimmergasse 16**
**8008 Zürich (CH)**

(56) Entgegenhaltungen:
**DE-C- 386 264       FR-A- 2 362 347**
**FR-A- 2 497 328       FR-A- 2 497 927**
**US-A- 4 491 125       US-A- 5 365 920**

**Beschreibung**

Die vorliegende Erfindung betrifft einen Rinnenkollektor für ein Solarkraftwerk nach dem Oberbegriff von Anspruch 1.

Solarthermische Kraftwerke produzieren schon seit einiger Zeit Strom im industriellen Massstab zu Preisen, die - gegenüber der Fotovoltaik - nahe an den heute üblichen kommerziellen Preisen für in herkömmlicher Art erzeugten Strom liegen.

In Solarthermischen Kraftwerken wird die Strahlung der Sonne durch Kollektoren mit Hilfe des Konzentrators gespiegelt und gezielt auf einen Ort fokussiert, in welchem dadurch hohe Temperaturen entstehen. Die konzentrierte Wärme kann abgeführt und zum Betrieb von thermischen Kraftmaschinen wie Turbinen verwendet werden, die wiederum die Strom erzeugenden Generatoren antreiben.

Heute sind drei Grundformen von solarthermischen Kraftwerken im Einsatz: Dish-Sterling-Systeme, Solarturmkraftwerkssysteme und Parabolrinnensysteme.

Parabolrinnenkraftwerke besitzen Kollektoren in hoher Anzahl, die lange Konzentratoren mit geringer Querabmessung aufweisen, und damit nicht einen Brennpunkt, sondern eine Brennlinie besitzen, was diese in ihrer Konstruktion grundlegend von den Dish-Sterling- und Solarturmkraftwerken unterschiedet. Diese Linienkonzentratoren besitzen heute eine Länge von 20 m bis zu 150 m, während die Breite 3 m, 5 m und mehr erreichen kann. In der Brennlinie verläuft eine Absorberleitung für die konzentrierte Wärme (bis gegen 400°C), welche diese zum Kraftwerk transportiert. Als Transportmedium kommt ein Fluid wie z.Bsp. Thermoöl oder überhitzter Wasserdampf in Frage, welches in den Absorberleitungen zirkuliert.

Obschon ein Rinnenkollektor vorzugsweise als Parabolrinnenkollektor ausgebildet ist, werden häufig Rinnenkollektoren mit sphärischem oder nur annährend parabolisch ausgebildetem Konzentrator verwendet, da ein exakt parabolischer Konzentrator mit den oben genannten Abmessungen nur mit grossem, damit wirtschaftlich kaum sinnvollen Aufwand herzustellen ist.

Die 9 SEGS-Rinnen-Kraftwerke in Südkalifornien produzieren zusammen eine Leistung von ca. 350 MW; ein zusätzliches Kraftwerk in Nevada soll zur Zeit ans Netz gehen und über 60 MW liefern. Ein weiteres Beispiel für ein Rinnenkraftwerk ist das im Bau befindliche Andasol 1 in Andalusien, mit einer Konzentratorfläche von 510'000 m$^2$ und 50 MW Leistung, wobei die Temperatur in den Absorberleitungen ca. 400° C erreichen soll. Das Leitungssystem für die Zirkulation des wärmetransportierenden Fluids kann in solchen Kraftwerken eine Länge von bis zu 100 km erreichen, oder mehr, wenn die Konzepte für die künftigen Grossanlagen realisiert werden. Die Kosten für Andasol 1 werden auf mehrere hundert Millionen € veranschlagt.

Überschlagsmässig lässt sich festhalten, dass ein immer grösserer Anteil der Gesamtkosten, heute z.Bsp. 65% oder mehr, bei solch einem Solarkraftwerk auf die Rinnenkollektoren und das Leitungssystem für das Wärme transportierende Fluid entfallen.

Angesichts der genannten hohen Baukosten und auch der hohen Wartungskosten für solche Rinnenkollektoren wurden schon früh Bauformen vorgeschlagen, bei welchen die Verschmutzung der spiegelnden Konzentratoroberfläche vermindert und dadurch der Wartungsaufwand, aber auch der Aufwand für den Bau des Kollektors selbst, reduziert ist.

So zeigt FR-PS 1.319.144 einen Wannen- oder Rinnenkollektor für ein Solarkraftwerk der oben genannten Art, der eine zylindrische Druckzelle aus einer flexiblen Membran aufweist, die einen transparenten Bereich und einen reflektierenden Bereich aufweist. Durch erhöhten Innendruck wird die zylindrische Druckzelle in ihrer Form gehalten, so dass durch den transparenten Bereich eingefallene Sonnenstrahlung auf den sphärisch gekrümmten, reflektierenden Bereich gelangt und von diesem auf eine in der Druckzelle verlaufende Absorberleitung konzentriert wird.

Mit solch einer Anordnung ist es grundsätzlich denkbar, ein durch die zylindrische Druckzelle hindurch verlaufende Absorberleitung entlang ihrer Länge aufzuheizen, wobei sie durch die Druckzelle vor Verschmutzung und Kühlung durch den Wind geschützt ist. Der so entfallende Reinigungsaufwand für die Absorberleitung und speziell der Schutz vor Kühlung sind nicht zu unterschätzende Kostenfaktoren bei der Produktion von Solarstrom im industriellen Massstab.

Eine konventionelle Absorberleitung z.Bsp., die im Freien verläuft, verliert durch Wärmeabstrahlung und Kühlung durch die Umgebungsluft bis zu 100 W/m, was bei einer Leitungslänge von bis zu 100km (oder mehr) einem Verlust von 10 MW entspricht. Jede Reduktion dieses Verlusts z.Bsp. durch Schutz vor Windkühlung, ist deshalb von Bedeutung und anzustreben.

Weiter eröffnet die Ausbildung des Konzentrators als flexible Membran, die ein geringes Gewicht besitzt, die gesamte Tragstruktur des Kollektors einfacher und damit günstiger aufzubauen, da die gegenüber den herkömmlichen, massiven Spiegeln wesentlich weniger Gewicht gelagert und (dem Sonnenstand entsprechend) verschwenkt werden muss. Schliesslich ist auch ein aus einer flexiblen Membran bestehender Konzentrator günstiger herzustellen und einfacher zur Baustelle zu bringen (die der Natur der Sache nach in abgelegenen Gebieten, z.B. einer Wüste, liegen kann), und auch einfacher zu montieren, als dies bei konventionellen Konzentratoren der Fall ist.

Die Ausbildung eines Rinnenkollektors mit einer zylindrischen Druckzelle ist jedoch bei den heute geforderten, oben erwähnten Abmessungen nicht praktikabel. Die durch den zylindrischen Membrankörper gebildete äusserst grosse Angriffsfläche für z.Bsp. Wind erfordert eine Verstärkung der zylindrischen Druckzelle durch ein massives Fachwerk, wie es bereits in der genannten FR-PS im Hinblick auf verstärkende "nervures annulaires" des zylindrischen Körpers erwähnt wird. Durch ein solches Fachwerk, welches zu der an sich leichter und einfacher zu bauenden Tragstruktur für den Zylinder hinzu tritt, verliert die offenbarte Ausführungsform die in der FR-PS eingangs erwähnten Vorteile betreffend leichter und günstiger Konstruktion im wesentlichen Mass.

Dieselbe Bauform eines Rinnenkollektors mit aufblasbarem Kollektorkörper zeigt FR-PS 2 362 347. Hier wird berücksichtigt, dass auf dem transparenten Abschnitt der Membran auftreffende Sonnenstrahlung in Abhängigkeit vom Auftreffwinkel teilweise reflektiert wird; praktisch nicht, wenn die Sonnenstrahlung senkrecht auf den transparenten Abschnitt auftrifft, und mit ansteigendem Anteil, je schräger sie auf diesen gelangt.

Eine zylinderförmige Druckzelle hat entsprechend die Eigenschaft, dass (in Richtung der Sonnenstrahlung gesehen) randseitig auf ihr auftreffende Sonnenstrahlen im Wesentlichen reflektiert werden, also den Konzentrator nur noch zu einem geringen Anteil erreichen.

Entsprechend besitzt der in der FR-PS 2 362 347 dargestellte zylindrische Rinnenkollektor eine reflektierende Schicht, die sich nicht über die an sich mögliche Hälfte des Zylindermantels, sondern nur über ein Segment dieser Zylinderhälfte erstreckt.

Dadurch ergibt sich bei gleicher Konzentratorfläche ein noch grösserer Zylinderdurchmesser, als bei der Bauform nach FR-PS 1 319 144, was entsprechend ungünstig ist. Abhilfe wird gesucht, indem beim zylindrischen Körper die parallel zur Sonnenstrahlung verlaufenden Mantelbereiche gewissermassen "weggeschnitten" werden; es ergibt sich so eine bikonvexe, linsenförmige Struktur, deren Dicke bzw. Höhe gegenüber dem Durchmesser des Zylinders bei gleichbleibendem Anteil an eingefallenem bzw. nicht reflektiertem Sonnenlicht reduziert ist.

An Stelle der bikonvexen Struktur kann auch eine Struktur treten, bei welcher die transparente Membran durch eine feste (transparente) Platte ersetzt wird, die senkrecht zum einfallenden Sonnenlicht ausgerichtet ist, mit dem Vorteil, dass kaum mehr Sonnenstrahlung reflektiert wird, und mit dem Nachteil, dass die Kosten für die Herstellung solch eines Rinnenkollektors ansteigen, da die Vorteile bei Verwendung einer Membran (Leichtbau, der auch günstigere Strukturen für das Gestell des Kollektors etc. erlaubt) wieder mindestens teilweise verloren gegangen sind.

Zudem erkennt der Fachmann, dass die gezeigten Ausführungsformen auch in bikonvexer, d.h. linsenförmiger Konfiguration tatsächlich immer noch erhebliche Höhe aufweisen, da der Brennlinienbereich innerhalb der Druckzelle liegt, somit der Krümmungsradius des Konzentrators entsprechend klein ist, was bei einem Rinnenkollektor von 5 oder 10m Breite zu einem beträchtlichen Volumen der Druckzelle führt. Die Angriffsfläche auch für seitlich einfallenden Wind (z.Bsp. bei Ruhestellung für starken Wind) ist nach wie vor so gross, dass auch hier ein die Druckzelle unter Windangriff stabilisierendes, zusätzliches Fachwerk zur Tragstruktur für die Druckzelle selbst hinzukommen muss, also nicht weggelassen werden kann.

Die Tragstruktur für die Druckzelle kann im Wesentlichen aus einem einfachen, rechteckigen Rahmen bestehen, in welchem die Druckzelle ihren Längsrändern entlang aufgespannt wird.

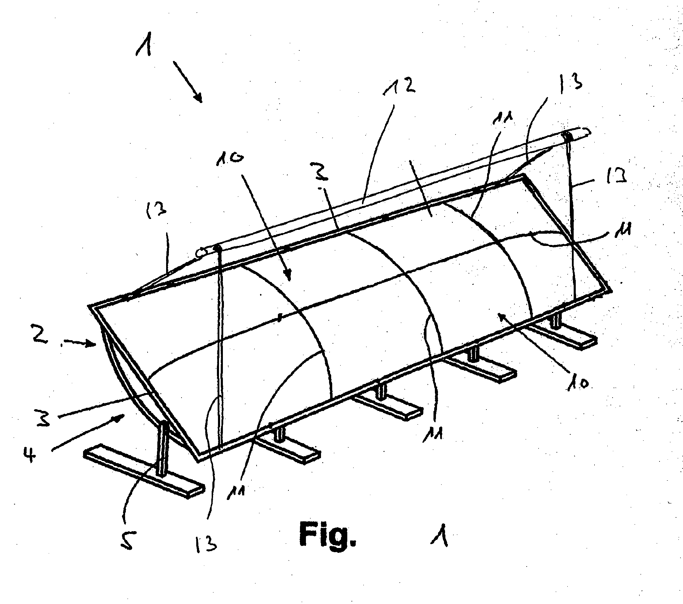

WO 90/10182 (die der US 5 365 920 entspricht) zeigt nun in Fig. 1 einen Rinnenkollektor, der gegenüber der Zylinderförmigen Ausführung in der Höhe reduziert werden, aber dennoch im Querschnitt eine grössere Ausdehnung des sphärisch gekrümmten Konzentrators 2 erlauben soll. Diese grosse Ausdehnung für hohe Konzentration der Strahlung bringt es mit sich, dass der Abstand des Absorberrohrs 6 nicht viel kleiner ist als der Krümmungsradius des Konzentrators 2. Aufgrund der sphärischen Krümmung des Konzentrators 2 ist wiederum der Brennlinienbereich derart ausgedehnt, dass die durch den Konzentrator 2 nur ungenügend konzentrierbare Strahlung "nachkonzentriert" werden muss, was mit Hilfe eines gemäss der genannten Offenbarung zylindrischen Sekundärkonzentrators 5 erfolgt. Der Fachmann erkennt jedoch leicht, dass dies durch einen zylindrischen Sekundärkonzentrator 5 kaum möglich ist: für die Reflektion am Sekundärkonzentrator 5 gilt, dass der Einfallswinkel der Strahlung gleich dem Ausfallswinkel ist, welche Winkel relativ zum Lot auf den jeweiligen Oberflächenbereich des Sekundärkonzentrators 5 gemessen werden. Dieses Lot wird nun von der Längsachse des Absorberrohrs 7 aus auf die Oberfläche des Sekundärkonzentrators gefällt. Für alle am Konzentrator 2 reflektierten Strahlen, die aufgrund des grossen Brennlininenbereichs das Absorberrohr 7 um einen Abstand verfehlen (und deshalb auf den Sekundärkonzentrator 5 gelangen), gilt deshalb, dass sie dieses nach ihrer Reflektion am zylindrischen Sekundärkonzentrator wiederum um denselben Abstand verfehlen müssen. Der Fachmann wird also die in Fig. 1 dargestellte Anordnung kaum realisieren können und deshalb die bevorzugten Ausführungsformen realisieren, die gemäss der genannten Offenbarung (Seite 9) vorteilhafterweise einen Sekundärkonzentrator nicht benötigen. Diese Ausführungsformen zeigen eine Druckzelle mit einem genügend grossem Krümmungsradius des Konzentrators 54. Solch eine Druckzelle hat dann die gewünscht vorteilhaft geringe Höhe, wobei allerdings das Absorberrohr 50 weit ausserhalb der Druckzelle angeordnet werden muss.

Die DE OS 27 33 915 (die der FR PS 2 398 982 entspricht) zeigt einen konventionellen Rinnenkollektor mit starrem Konzentrator (d.h. ohne Druckzelle) der gemäss der Aufgabe ausgebildet ist, den Konzentrator in einer richtigen Ausrichtung zur Sonne zu halten und ein Abkühlen des Absorberrohrs (während der Nacht) zu verhindern. Dazu wird ein Sekundärkonzentrator im Brennlinienbereich hinter dem Fokus f der konzentrierten Strahlung angeordnet, der die konzentrierte Strahlung auf ein gegenüber der Verschwenkbewegung des Konzentrators ortsfestes Absorberrohr reflektiert. Das ortsfeste Absorberrohr kann dann über Nacht über Türen von der Aussenwelt abgeschlossen werden, so dass en Wärmeverlust verhindert ist. Da eine Druckzelle nicht vorliegt, erübrigt sich eine Reduktion der Höhe der Anordnung. Die Höhe bzw. der Abstand des Brennlinienbereichs und damit auch des Sekundärkonzentrators vom Konzentrator entspricht der Höhe bzw. des Abstands des Absorberrohrs 50 (gemäss der oben erwähnten WO 90/10182) vom Konzentrator der dort gezeigten Druckzelle.

Entsprechend besitzen die heute gebauten oder geplanten Solarkraftwerke des Typs mit Rinnenkollektoren solche herkömmlicher Art ohne Druckzelle, und realisieren damit die an sich denkbaren Vorteile (kostengünstiger Leichtbau, vereinfachte Wartung durch vor Verschmutzung geschützte Konzentratoren, keine Kühlung der Absorberleitung durch Wind, etc.) nicht.

Damit ist es die Aufgabe der vorliegenden Erfindung, einen Rinnenkollektor mit einer Druckzelle bereit zu stellen, die bei herkömmlichen Breiten, aber auch bei einer Breite von 8m, 10m oder mehr realisierbar ist.

Zur Lösung dieser Aufgabe besitzt der erfindungsgemässe Rinnenkollektor die Merkmale von Anspruch 1.

Dadurch, dass der Konzentrator die einfallende Sonnenstrahlung gegen einen ausserhalb der Druckzelle verlaufenden Brennlinienbereich konzentriert, kann er flach, d.h. mit einem grossen Krümmungsradius konzipiert werden, was die Grundlage bietet, die Höhe der Druckzelle klein zu halten; dadurch, dass ein Sekundärkonzentrator im Pfad der sich erst konzentrierenden Strahlung, also vor dem Brennlinienbereich vorgesehen ist, kann die Absorberleitung innerhalb der Druckzelle, an einem geeigneten Ort, angeordnet werden, ohne deren Höhe zu vergrössern, mit der Folge, dass die Druckzelle z.Bsp. ohne eigenes Verstärkungs-Fachwerk gebaut werden kann und damit ihre Vorteile als preisgünstige Leichtbaulösung genutzt werden können.

Über die gestellte Aufgabe hinaus wird durch die Merkmale des Anspruchs 6. ein Herstellverfahren für solch einen RinnenKollektor angegeben, das nicht auf Versuchen aufsetzen muss und auch als Instrument für den Fachmann geeignet ist, und das ermöglicht, den Sekundärkonzentrator für einen Kollektor im konkreten Fall schnell und einfach auszulegen, und damit gegebenenfalls auch vor Ort richtig, verbessert oder korrigiert ausgelegt herstellen zu können. Letzteres kann auch für Nachrüstungen konventioneller Kollektoren in Frage kommen.

Das erfindungsgemässe Verfahren ermöglicht eine einfache, nicht aufwendige Berechnung der Krümmung der reflektierenden Oberfläche des Sekundärkonzentrators, mit der jeweils gewünschten Genauigkeit, so dass je nach Auslegung eines Rinnenkollektors im konkreten Fall der Sekundärkonzentrator ohne weiteres richtig ausgelegt und hergestellt werden kann.

Bevorzugte Ausführungsformen besitzen die Merkmale der abhängigen Ansprüche.

Die Erfindung wird anhand der Figuren näher beschrieben. Es zeigt:

Fig. 1 schematisch eine Ansicht des erfindungsgemässen Rinnenkollektors,

Fig. 2 einen Querschnitt durch den Rinnenkollektor von Fig. 1 mit einer ersten Anordnung des Sekundärkonzentrators

Fig. 3. schematisch einen Querschnitt durch den Rinnenkollektor von Fig. 1 mit einer zweiten Anordnung des Sekundärkonzentrators,

Fig. 4 eine bevorzugte Ausführungsform des erfindungsgemässen Rinnenkollektors,

Fig. 5 einen Querschnitt durch die Druckzelle eines Rinnenkollektors mit zwei Druckräumen,

Fig. 6 einen Querschnitt durch eine Absorberleitung, und

Fig. 7 ein in die Anordnung von Fig. 4 gelegtes Koordinatensystem mit den im erfindungsgemässen Verfahren verwendeten Vektoren.

Fig. 1 zeigt eine Ansicht des erfindungsgemässen Rinnenkollektors 1 mit einer Tragstruktur 2, bestehend aus einem rechteckigen Rahmen 3, der auf einer Verschwenkeinrichtung 4 gelagert ist, welche ihrerseits auf geeigneten Stützen 5 ruht. Die Verschwenkeinrichtung 4 ermöglicht, den Rinnenkollektor 1 dem jeweiligen Sonnenstand entsprechend auszurichten. Der rechteckige Rahmen 3 ist bevorzugt aus Beton ausgebildet, was für eine erleichterte Herstellung vor Ort, d.h. auf der Baustelle selbst, günstig ist.

Die Figur zeigt weiter eine Druckzelle 10 unter Betriebsdruck, d.h. im aufgeblasenen Zustand mit der durch die Hilfslinien 11 symbolisierten kissenartigen Form. Die Länge solch eines Rinnenkollektors 1 kann 250 m, die Breite 10 m übersteigen. Die Höhe der Druckzelle 10 ist abhängig von der Breite, aber auf jeden Fall kleiner als diese.

Ein Absorberrohr 12 wird durch die reflektierte Sonnenstrahlung aufgeheizt; der Konzentrator befindet sich in der Druckzelle 10 und ist deshalb in der Figur nicht sichtbar. Das Absorberrohr 12 ist an geeigneten Stützen 13 aufgehängt, so dass es sich im Brennlinienbereich des Konzentrators befindet.

In den nachfolgenden Figuren werden für gleiche Teile dieselben Bezugsnummern verwendet.

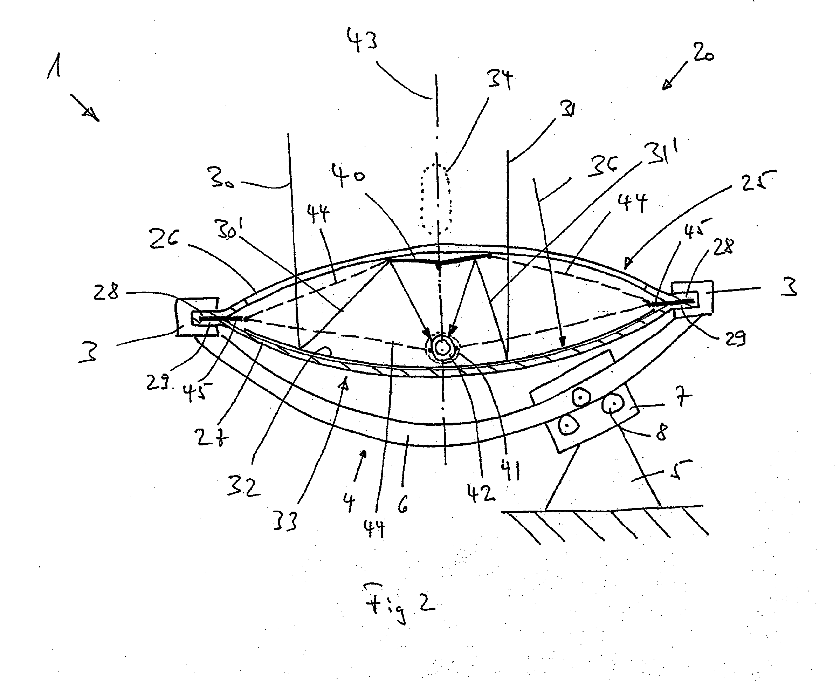

Fig. 2 zeigt schematisch einen Querschnitt durch eine erste Ausführungsform 20 des Rinnenkollektors 1. Die Verschwenkeinrichtung 4 ist gebildet durch einen bogenförmigen Verschwenkbügel 6, der in einem Verschwenkantrieb 7 läuft, welcher über Rollen 8 den Verschwenkbügel 6 verstellt und damit den Rahmen 3 in gewünschter Stellung ausrichtet.

Im Rahmen 3 befestigt (und damit durch diesen aufgespannt) ist eine Druckzelle 25, die aus flexiblen Membranabschnitten 26,27 gebildet ist, vorliegend deren zwei, die ihren Rändern 28,29 entlang verbunden sind. Der eine, hier obere Membranabschnitt 26 ist für einfallendes Sonnenlicht, dargestellt durch die Strahlen 30, 31, mindestens teilweise transparent; der andere, untere Membranabschnitt 27 ist durch eine den Sonnenstrahlen 30,31 zugewandte reflektierende Beschichtung 32 als Konzentrator 33 ausgebildet.

Unter Betriebsdruck werden die Membranabschnitte 26,27 mit Druck beaufschlagt und dabei sphärisch gekrümmt, so dass der Konzentrator 33 im Rahmen 3 seine Rinnenform einnimmt, die dieser Gattung von Solarkollektoren den Namen gegeben hat.

Durch die sphärische Krümmung ergibt sich gegenüber einer exakten parabolischen Krümmung, dass die durch den Konzentrator 33 reflektierten Strahlen 30',31' in einen Brennlinienbereich 34, und nicht in eine Brennlinie konzentriert werden. Der Brennlinienbereich 34 ist schematisch durch die punktierte Linie angedeutet. Die Auslegung eines zu bauenden Rinnenkollektors 20, d.h. Länge, Breite etc., also auch die Auslegung des Krümmungsradius 36, erfolgt durch den Fachmann im Hinblick auf ein konkretes Projekt.

Der Krümmungsradius 36 des Konzentrators 33 ist so gross gewählt, dass der Brennlinienbereich 34 ausserhalb der Druckzelle 25 liegt, mit dem Vorteil, dass diese flach ausgebildet ist, d.h. eine geringe Höhe besitzt. Im Fall heftiger Winde kann die Druckzelle 25 durch den Verschwenkantrieb 7 derart ausgerichtet werden, dass sie dem Windangriff nur von der Schmalseite her, mit ihrer geringen Höhe, ausgesetzt ist. Damit entfällt ein zusätzliches, die Druckzelle 25 stabilisierendes Fachwerk (oder auch andere konstruktive Massnahmen zur Stablilisierung der Druckzelle 25). Die Druckzelle 25 mit dem Konzentrator 33 besitzt gegenüber einem konventionellen, massiv gebauten Konzentrator geringes Gewicht, mit der Folge, dass der Rahmen 3, aber auch die Verschwenkeinrichtung 4 mit den Stützen 5 geringer dimensioniert werden können. Als Folge dieses Leichtbaus ergibt sich nicht nur eine materialseitige Kostenreduktion, sondern auch eine wesentlich vereinfachte Herstellung und Montage, die besonders für abgelegene Gebiete, wie Wüstengebiete, geeignet ist.

In der Druckzelle 25 sind weiter ein Sekundärkonzentrator 40 und eine Absorberleitung 42 vorgesehen, die über ein Trägerfachwerk mit gestrichelt angedeuteten Trägern 44 an Halteplatten 45 des Rahmens 3 aufgehängt sind. Damit bleibt trotz grossem Krümmungsradius des Konzentrators 33 der Vorteil bestehen, dass die Sonnenstrahlung 30,31 nicht zweimal durch die transparente Membran 26 hindurchtreten muss; mit der Folge, dass auch der Verlust infolge Alterung der Membran 26 entsprechend klein bleibt: pro Prozent an Verlust von Transparenz der Membran 26 (z.Bsp. Verschmutzung oder Verkratzung der Oberfläche) würde bei zweimaligem Durchtritt der Sonnenstrahlung 30, 31 durch die Membran 26 ein doppelter Energieverlust von jeweils zwei Prozent resultieren.

Die Ausbildung und Dimensionierung des oben genannten Trägerfachwerks kann durch den Fachmann leicht für einen konkret zu bauenden Rinnenkollektor 1 vorgenommen werden.

In der Absorberleitung 42 zirkuliert auf bekannte Weise ein Wärme transportierendes Fluid, das die von der einfallenden, konzentrierten Strahlung 30, 31 erzeugte Wärme abtransportiert.

Der Wartungsaufwand für den Sekundärkonzentrator 40 und die Absorberleitung 42 ist klein, da beide (wie auch der Konzentrator 33 selbst) durch die Druckzelle 25 vor Verschmutzung geschützt sind. Diese kann zudem an Stelle der Umgebungsluft mit z.Bsp. Stickstoff gefüllt werden, was zusätzlich die Korrosion sowohl der reflektierenden Schicht des Konzentrators 33 als auch des Sekundärkonzentrators 40 (falls er z.Bsp. aus Blech bestehen sollte, s. unten) verhindert oder verlangsamt. Alternativ dazu kann die Luft in der Druckzelle 25 entfeuchtet werden.

Dabei ist der Sekundärkonzentrator 40 im Pfad der durch den Konzentrator 33 sich konzentrierenden Strahlung 30',31' angeordnet und derart ausgebildet, dass die konzentrierte Strahlung 30' 31' weiter, gegen einen sekundären Brennlinienbereich 41 am Ort der Absorberleitung 42 hin, konzentriert wird. Es ergibt sich eine Anordnung, bei der der Sekundärkonzentrator 40 dem Konzentrator 33 gegenüberliegt und nahe dem transparenten Membranabschnitt 26 angeordnet ist, wobei die Absorberleitung 42 zwischen dem Konzentrator 33 und dem Sekundärkonzentrator 40 verläuft. Da die Krümmung des Konzentrators 33 bei gegebener Breite des Rinnenkollektors 1 schwach ausgeprägt ist (grosser Krümmungsradius 36), besitzt der Brennlinienbereich 34 eine nur kleine Ausdehnung, mit dem Vorteil, dass der Sekundärkonzentrator 40 schmal baut und nur wenig Schatten wirft.

Die Absorberleitung 42 ist von äusseren Einflüssen wie Wind geschützt und verliert im Betrieb entsprechend wenig Wärme.

Das in der Figur dargestellte Grundlayout für einen Rinnenkollektor gemäss der vorliegenden Erfindung ist symmetrisch bezüglich einer mittig längs der durch den Konzentrator 33 gebildeten Rinne verlaufenden Symmetriebene, die durch die strichpunktierte Linie 43 angedeutet ist.

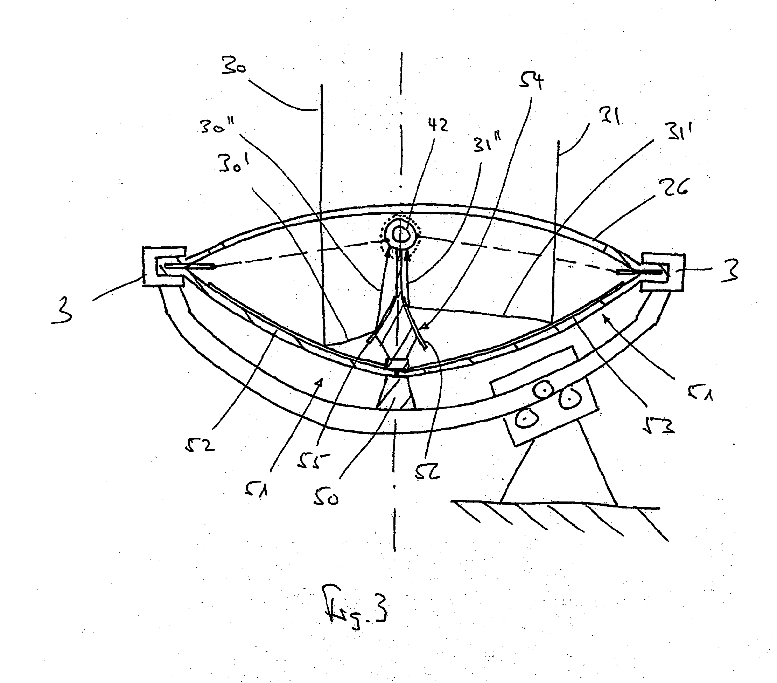

Figur 3 zeigt eine zweite Ausführungsform des erfindungsgemässen Rinnenkollektors 1. Eine Trägerstruktur 50 teilt den Konzentrator 51 in mehrere, hier zwei längs verlaufende Bereiche 52,53, die v-förmig gegeneinander geneigt und, da druckbeaufschlagt, je sphärisch gekrümmt sind. Die konzentrierten Sonnenstrahlen 30', 31' fallen je auf einen zugeordneten Bereich 55,56 eines entsprechend ausgebildeten Sekundärkonzentrators 54, und gelangen als durch diesen weiter konzentrierte Strahlen 30",31" zur Absorberleitung 42. Der Konzentrator 51 und der Sekundärkonzentrator 54 sind somit je in zwei längs verlaufende, zu einander symmetrische Bereiche 52,53 und 55,56 aufgeteilt.

Bei nicht wesentlich vergrösserter Bauhöhe der Druckzelle 25 besitzt diese Anordnung den Vorteil, dass nur wenig oder kein Schatten auf die Konzentratorbereiche 52,53 fällt und die Absorberleitung 42 selbst durch Sonnenlicht beleuchtet ist.

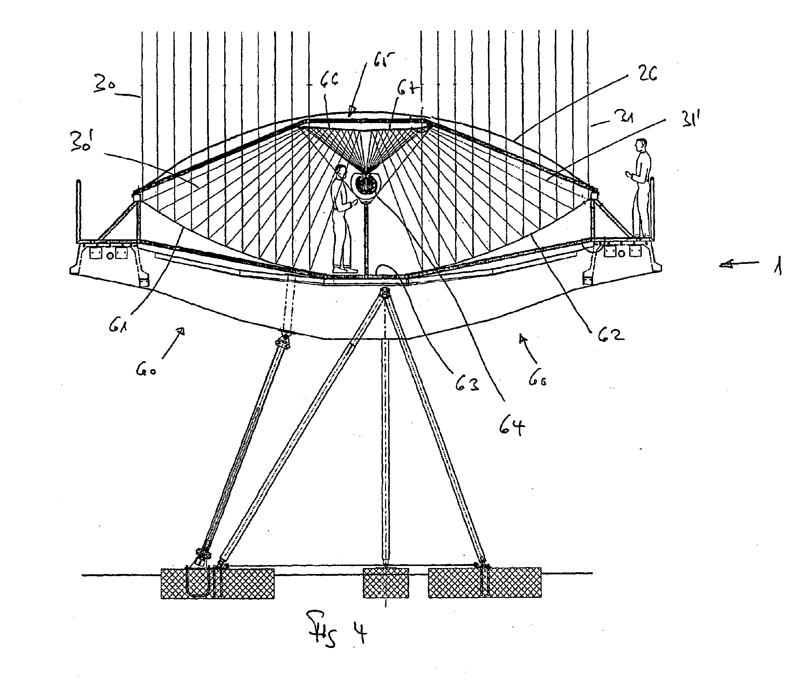

Figur 4 zeigt eine weitere, bevorzugte Ausführungsform des erfindungsgemässen Kollektors 1. Der Konzentrator 60 weist zwei längs verlaufende reflektierende Bereiche 61,62 auf, die einen Mittelstreifen 63 zwischen sich einschliessen, der vorteilhafterweise zur Tragstruktur des Rinnenkollektors gehört und damit begehbar ist. Dadurch ist die über dem Mittelstreifen 63 verlaufende Absorberleitung 64 für Montage und Wartung leicht zugänglich, so wie der ebenfalls über dem Mittelstreifen 63 verlaufende und unter dem transparenten Membranabschnitt 26 angeordnete Sekundärkonzentrator 65, welcher seinerseits zwei Bereiche 66,67 besitzt, die jeweils die Sonnenstrahlung 30',31' aus dem ihnen zugeordneten Bereich 61,62 des Konzentrators 60 weiter, gegen die Absorberleitung 64 hin, konzentrieren. Diese Anordnung besitzt eine gegenüber derjenigen von Figur 2 unverändert geringe Bauhöhe, ist günstig für Montage und Wartung, aber zusätzlich unempfindlich gegen den Schattenwurf des Sekundärkonzentrators, da die beiden Bereiche 61,62 des Konzentrators 60, weil von einander durch den Mittelstreifen 63 getrennt, nicht oder nur marginal vom Schatten erreicht werden können.

Grundsätzlich ist es wünschenswert, den Brennlinienbereich so klein wie möglich auszubilden, was zu einer hohen Temperatur und damit zu einem verbesserten Wirkungsgrad der thermischen Maschinen des Solarkraftwerks führt. Andererseits können in einem Brennlinienbereich, der sich der idealen Brennlinie nähert, Temperaturen entstehen, die eine aus Metall bestehende, konventionelle Absorberleitung lokal zum Glühen bringen.

Die Temperaturverteilung an der Absorberleitung 42,64 wird von der Auslegung des Sekundärkonzentrators 40,54,65 wesentlich mitbestimmt, da der Konzentrator als druckbeaufschlagte Membran stets sphärisch gekrümmt ist. Eine im konkreten Fall gewünschte Temperaturverteilung an der Absorberleitung 42,64 wird durch entsprechende Krümmung des Sekundärkonzentrators 40,54,65 bzw. seiner Bereiche 55,56 der 66,67 quer zur Länge erreicht. Ein geeignetes Profil der Krümmung kann der Fachmann z.Bsp. durch Versuche leicht ermitteln. So kann z.Bsp. eine kleine Laserlampe auf einer Schiene parallel verfahren werden (was die Strahlen der Sonne simuliert) und über einen senkrecht zum Strahl aufgestellten reflektierenden schmalen Streifen (mit der Krümmung des Konzentrators) durch Parallelverschiebung der Lampe der Brennlinienbereich des Konzentrators dargestellt werden. Am Ort des Sekundärkonzentrators wiederum befindet sich ein zweiter reflektierender schmaler Streifen (ebenfalls senkrecht zum Strahl angeordnet), dessen Krümmung laufend veränderbar ist, solange, bis das gewünschte Resultat für den sekundären Brennlinienbereich erreicht oder eine Brennlinie erzeugt worden ist.

Hier ist anzufügen, dass die ideale Brennlinie wegen dem Durchmesser der Sonne grundsätzlich nicht erzeugt werden kann. Über die gestellte Aufgabe hinaus ergibt sich bei der erfindungsgemässen Konfiguration durch die Verwendung eines Sekundärkonzentrators 40,54,65 in der sich konzentrierenden Strahlung30',31' der erhebliche Vorteil, dass der Lichtpfad zwischen dem Konzentrator 33,60,65 und der Absorberleitung 42, 64 kürzer ist, als es in einer vergleichbaren Konfiguration ohne Sekundärkonzentrator 40,54,65 der Fall wäre; damit ist die Defokussierung kleiner und eine der theoretischen verbessert angenäherte Brennlinie erreichbar.

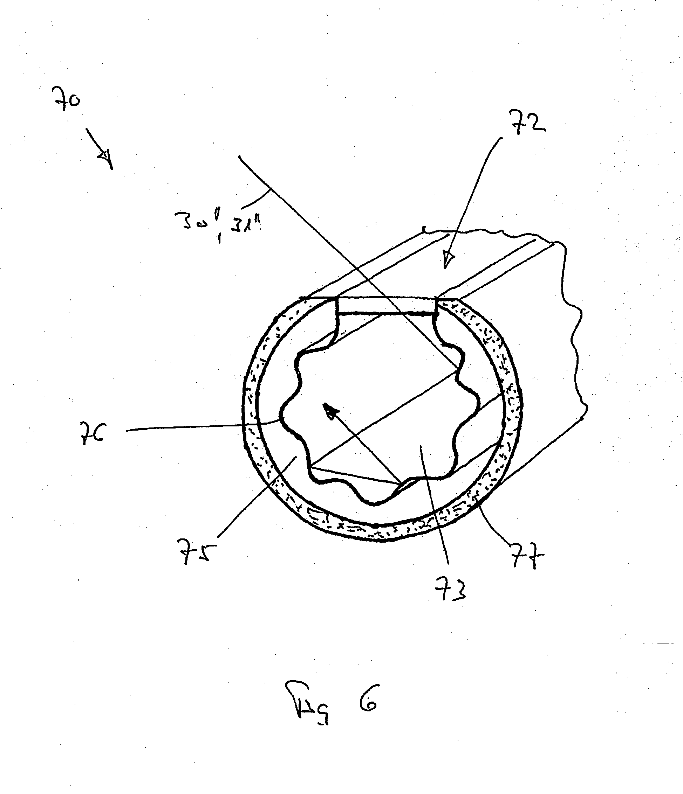

Vorteilhafterweise besteht der Sekundärkonzentrator 40,54,65 aus einem Profil aus Blech (oder aus zwei solchen Profilen, die dann die Bereiche 55,56 oder 66,67 des Sekundärkonzentrators bilden), das langgestreckt, quer zu seiner Länge gekrümmt ist und auf seiner konkaven Seite eine reflektierende Schicht besitzt. Der Fachmann bestimmt dann (wie oben erwähnt, gegebenenfalls durch Versuche) die gewünschte Krümmung des Profils so, dass in der vorbestimmten relativen Lage von Konzentrator 33,60,65 und Sekundärkonzentrator 40,54,65 der gewünschte Brennlinienbereich entsteht. Alternativ, je nach Ausbildung der Absorberleitung 64 (s. unten, Fig. 6) kann natürlich auch eine Brennlinie an Stelle eines Brennlinienbereichs angestrebt werden.

Die vorbestimmte Krümmung kann auch durch eine Anzahl gerade Abschnitte angenähert werden, die dem Profil der Krümmung folgen; wird ein Blechprofil verwendet, ist die herzustellende Profilform leicht durch ein- oder mehrfaches Abkanten herzustellen.

Andererseits kann die gewünschte Profilform leicht durch Umformung eines Blechs in einer Presse hergestellt werden, was erlaubt, den Brennlinienbereich (oder die Brennlinie) genau zu definieren. Die reflektierende Schicht kann vor oder nach dem Umformvorgang auf das Blech bzw. auf die konkave Seite des erzeugten Blechprofils aufgebracht werden.

Mit anderen Worten ist es so, dass auch der Sekundärkonzentrator 40,54,65 einfach und robust aufgebaut und von vergleichsweise geringem Gewicht ist; weiter ist auch er leicht transportabel und kann gegebenenfalls vor Ort hergestellt werden.

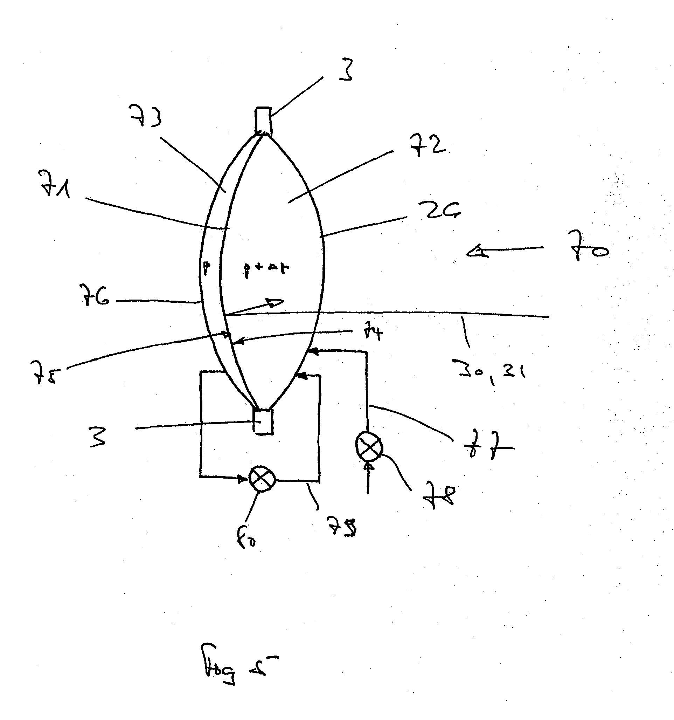

Fig. 5 zeigt einen Querschnitt durch eine weitere Ausführungsform einer Druckzelle 70 für einen Rinnenkollektor 1, die durch den Konzentrator 71 in einen ersten Druckraum 72 und einen zweiten Druckraum 73 unterteilt wird. Eine die Sonnenstrahlung 30,31 reflektierende Seite 74 des Konzentrators 71 ist dem transparenten Bereich des mindestens teilweise transparenten Membranabschnitts 26 zugewendet. Die Figur zeigt weiter eine der Sonnenstrahlung abgewandte Seite 75 des Konzentrators 71. Im ersten Druckraum 72 herrscht ein höherer Druck als im zweiten Druckraum 71, so dass der Konzentrator unter Betriebsdruck sphärisch gekrümmt ist und die Strahlung 30, 31 auf den Sekundärkonzentrator konzentriert.

Der Vorteil dieser Anordnung besteht darin, dass der betriebsfähige Druckunterschied in den Druckräumen 72,73 sehr klein gehalten werden kann, was erlaubt, den Konzentrator 71 entsprechend dünnwandig auszubilden und damit eine reflektierende Beschichtung von hoher Qualität vorzusehen. Demgegenüber können die Membranabschnitte 26 und 75 robust ausgebildet sein.

Im ersten Druckraum 72 wird der Betriebsdruck durch eine vorzugsweise als Luftleitung 77 ausgebildete Fluidleitung aufgebracht, wobei als Fluidpumpe vorzugsweise ein Ventilator 78 vorgesehen ist. Der zweite Druckraum 73 wird über eine Überströmleitung 79 gespiesen, die die beiden Druckräume 72,73 mit einander verbindet. Der (geringe) Druckunterschied zwischen den Druckräumen 72,73 wird durch eine weitere als Ventilator 80 ausgebildete Fluidpumpe erzeugt. Er ist kleiner ist als 0.5 mbar, liegt vorzugsweise in einem Bereich von 0.05 bis 0.2 mbar, und besonders bevorzugt im Bereich von 0.05 bis 0.1 mbar.

Durch diese Mittel wird in den Druckräumen 72,73 betriebsfähig Druck je in einem vorbestimmten Mass erzeugt und gehalten, wenn im Betrieb das Volumen eines oder beider Druckräume 72,73 durch äussere Einflüsse wie z.Bsp. Wind, verändert wird. Dies ist besonders dann der Fall, wenn durch Windböen die Wölbung des Membranabschnitts 26 oder 26 eingedrückt oder anders verformt wird. Durch die vorgesehenen Mittel bleibt der Differenzdruck immer im Wesentlichen konstant, so dass der dünnwandig ausgebildete Konzentrator seine sphärische Form behält und auch nicht überbeansprucht werden kann: verkleinert sich das Volumen der Druckräume, kann die eingeschlossene Luft gegebenenfalls auch gegen die Arbeitsrichtung der Ventilatoren schnell ausströmen. Diese Konfiguration mit gekoppelten Ventilatoren 78,80 ergänzt die günstigen Eigenschaften der Druckzelle 25, d.h. erlaubt den Einsatz eines Konzentrators mit qualitativ hochstehender reflektierender Beschichtung, ohne dass die Druckzelle durch ein eigenes Fachwerk (oder andere Massnahmen) gestützt werden muss. Eine Druckzelle 70 mit zwei Druckräumen 72,73 der genannten Art ist in der PCT/CH2007/000480 derselben Anmelderin beschrieben, deren Inhalt hiermit in diese Anmeldung aufgenommen wird, insbesondere im Hinblick auf die Ausführbarkeit und auf den Schutzbereich der vorliegenden Erfindung.

Fig. 6 zeigt eine Absorberleitung 70, mit einem Mantel 77, der die Wärmeabgabe nach aussen reduziert, aber eine in ihm längs verlaufende thermische Öffnung 72 aufweist, die den Durchtritt von vom Sekundärkonzentrator 40,54,65 konzentrierter Sonnenstrahlung 30",31" durch den Mantel 77 hindurch in den Innenraum 73 der Absorberleitung 70 hinein erlaubt. Dadurch wird die konzentrierte Wärme der Absorberleitung von innen her zugeführt, so dass der Mantel 77 einfach und einwandfrei isoliert werden kann. Das die Wärme transportierende Fluid zirkuliert in dem zwischen dem Innenraum 73 und dem Mantel 77 gebildeten ringartigen Raum 75. Die vorzugsweise wellenförmig ausgebildete Innenraumwand 76 streut lokal eingefallene Sonnenstrahlung durch mehrfache Reflektion diffus auf ihre gesamte Oberfläche, bis sie vollständig absorbiert ist.

Diese Konstruktion erlaubt gegenüber den Absorberleitungen des Stands der Technik eine verbesserte Isolation gegen Wärmeverlust und ergänzt diesbezüglich die Vorteile, die sich durch die vorliegende Erfindung ergeben. Wird die Krümmung des Sekundärkonzentrators auf eine möglichst kleine thermische Öffnung 72 abgestimmt, ergibt sich eine optimale Wärmenutzung durch einen Rinnenkollektor gemäss der vorliegenden Erfindung.

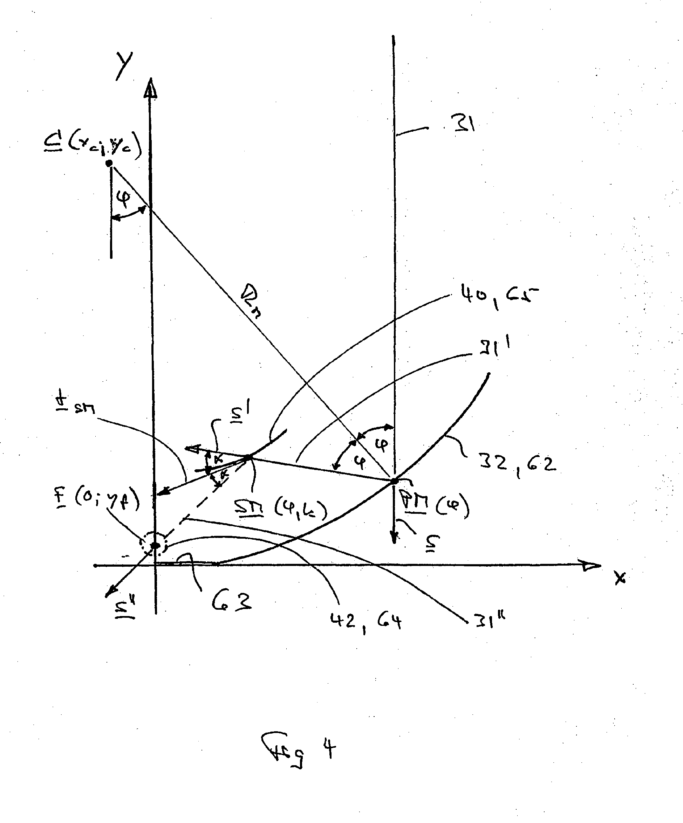

Fig. 7 zeigt nun in die Anordnung von Fig. 4 gelegtes x,y - Koordinatensystem mit den im erfindungsgemässen Verfahren verwendeten Vektoren, wobei das Koordinatensystem in einer Querschnittsebene, hier des Sekundärkonzentrators 65, liegt. Natürlich auch in einen Querschnitt durch den Rinnenkollektor 20 (Fig. 2) oder in einen Kollektor beliebiger Bauart eingelegt werden.

Zur Illustration ist in Fig. 7 der Mittelstreifen 63 angedeutet, der jedoch für den nachstehend geschilderten Berechnungsgang keine Rolle spielt. Ersichtlich sind der gegebene Konzentrator 32, 62, der im dargestellten Querschnitt, vorliegend da druckbeaufschlagt, kreisbogenförmig ausgebildet ist, und für den ein Sekundärkonzentrator 40,65 bestimmt werden soll. Weiter ersichtlich ist der Sonnenstrahl 31, der am Konzentrator 32,62 reflektierte Sonnenstrahl 31' und der am Sekundärkonzentrator wiederum reflektierte (gestrichelt dargestellte) Sonnenstrahl 31", der auf das strichpunktiert angedeutete Absorberrohr 42,64 auftrifft und von diesem absorbiert wird. In der Figur ist das Absorberrohr 42,64 durch den Brennpunkt bzw. einen Punkt auf der Brennlinie $F(0;y_\varphi)$ dargestellt. Das Absorberrohr 42,64 ist also ebenso wie der Konzentrator 32,62 vorbestimmt, d.h. für den Berechnungsgang vorgegeben.

Im den nachfolgend beschriebenen Schritten des Herstellverfahrens des Sekundärkonzentrators 40,65 sind Vektoren durch eine Unterstreichung als solche gekennzeichnet.

$\underline{C}(x_c;y_c)$ bezeichnet den Krümmungsmittelpunkt des vorgegebenen Konzentrators 32,62. $\underline{PM}(\varphi)$ bezeichnet einen allgemeinen Punkt auf dem Konzentrator 32,62 (bzw. auf der Konzentratoroberfläche); $R_M$ den Krümmungsradius des Konzentrators 32,62, der durch den Punkt $\underline{PM}(\varphi)$ läuft, wo $\varphi$ der Winkel von $R_M$ zur y-Achse ist.

Mit anderen Worten werden über den Winkel $\varphi$ alle Punkte auf dem Konzentrator 32,62 bezeichnet, von denen aus die Sonnenstrahlung 31 in das Absorberrohr 42,64 reflektiert werden soll.

Die Vektoren. $\underline{s}(\varphi)$, $\underline{s}'(\varphi)$ und $\underline{s}''(\varphi)$ sind Einheitsvektoren im Pfad der jeweiligen Sonnenstrahlen (und werden nachstehend der Einfachheit halber nicht mehr jedes Mal explizit als Funktion von $\varphi$ dargestellt): $\underline{s}$ liegt im Pfad des Sonnenstrahls 31, $\underline{s}'$ liegt im Pfad des am Konzentrator 32,62 reflektierten Strahls 31' und $\underline{s}''$ im Pfad des am Sekundärkonzentrator reflektierten Strahls 31''.

$R_M$ bildet als Krümmungsradius das Lot auf den Konzentrator im Punkt $\underline{PM}(\varphi)$. Einfallender und reflektierter Strahl bilden denselben Strahl zum Lot, entsprechend sind die Winkel zwischen $R_M$ und dem Stahl 31 sowie $R_M$ und $\underline{s}'$ gleich gross und gleich $\varphi$.

Der reflektierte Strahl 31' trifft den Sekundärkonzentrator 40,65 im Punkt $\underline{SM}(\varphi,k)$, wobei der Wert von k als Streckungsfaktor für $\underline{s}'$ unbekannt ist.

$\underline{t}_{SM}(\varphi)$ ist Tangente an den Sekundärkonzentrator 40,65 im Punkt $\underline{SM}(\varphi,k)$.

Die Einheitsvektoren $\underline{s}'$ und $\underline{s}''$ schliessen zwischen sich einen Winkel $2\alpha$ ein. Da $\underline{t}_{SM}$ Tangente an den Sekundärkonzentrator 40,65 im Punkt $\underline{SM}(\varphi,k)$ ist, ist sie damit auch Winkelhalbierende zwischen $\underline{s}'$ und $\underline{s}''$, gemäss dem oben erwähnten Grundsatz, wonach einfallender und reflektierter Strahl denselben Winkel zum Lot einnehmen. ($\underline{t}_{SM}$ steht als Tangente senkrecht zum Lot im Punkt $\underline{SM}(\varphi,k)$).

Wird nun der unbekannte Faktor k so bestimmt, dass $\underline{s}''$ durch den Brennpunkt $\underline{F}$ (bzw. das Absorberrohr 42,64) geht, ist $\underline{SM}(\varphi,k)$ bekannt. Damit die Form der reflektierenden Oberfläche des Sekundärkonzentrators 40, 65 bekannt, da jedem Wert $\varphi$ (d.h. jedem bestrahlten Punkt auf der Oberfläche des Konzentrators) ein korrespondierender Punkt auf der Oberfläche des Sekundärkonzentrators 40,65 zugeordnet werden kann, welche korrespondierenden Punkte zusammen die Oberfläche des gesuchten Sekundärkonzentrators 40,65 bilden.

Zusammenfassend ist die Vektorsumme der Vektoren $\underline{C} + \underline{CPM}(\varphi) + k\cdot\underline{s}'$ gleich dem Vektor $\underline{SM}(\varphi,k)$, der im Koordinatensystem den jeweiligen, einem Winkel $\varphi$ entsprechenden, Punkt auf der reflektierenden Oberfläche des Sekundärkonzentrators 40,65 entspricht.

Bei einer bevorzugten Ausführungsform des erfindungsgemässen Herstellverfahrens wird k dadurch bestimmt, dass die Skalarprodukte $\underline{s}'\cdot\underline{t}_{SM}(\varphi)$ und $\underline{s}''\cdot\underline{t}_{SM}(\varphi)$ zu $\underline{s}'\cdot\underline{t}_{SM}(\varphi) = \underline{s}''\cdot\underline{t}_{SM}(\varphi)$ gleichgesetzt werden, da der je eingeschlossene Winkel $\alpha$ gleich gross ist. In dieser bevorzugten Ausführungsform präsentiert sich die Rechnung wie folgt:

$$\underline{S} = \begin{pmatrix} 0 \\ -1 \end{pmatrix}$$

und damit ist

$$\underline{PM}(\varphi) = \underline{C} + R_m\cdot\begin{pmatrix} \sin\varphi \\ -\cos\varphi \end{pmatrix}$$

und

$$\underline{s}' = \begin{pmatrix} -\sin 2\varphi \\ \cos 2\varphi \end{pmatrix}$$

Die Gleichung des Sekundärkonzentrators 32,62 hat, s. oben, die Form

$$\underline{SM}(\varphi,k) = \underline{PM}(\varphi) + k\cdot\underline{s}'(\varphi)$$

womit die Tangente $\underline{t}_{SM}(\varphi)$ als Ableitung des Ausdrucks

$$= \underline{P\Pi}(\varphi) + k \cdot \underline{s}'(\varphi)$$

wird zu

$$\underline{t}_{SM}(\varphi) = \frac{d\underline{S\Pi}}{d\varphi} = \frac{d\underline{P\Pi}}{d\varphi} + \frac{dk}{d\varphi} \cdot \underline{s}' + k \cdot \frac{d\underline{s}'}{d\varphi} =$$

$$= R_m \begin{pmatrix} \cos\varphi \\ \sin\varphi \end{pmatrix} + \frac{dk}{d\varphi} \cdot \begin{pmatrix} -\sin 2\varphi \\ \cos 2\varphi \end{pmatrix} + 2 \cdot k \cdot \begin{pmatrix} -\cos 2\varphi \\ -\sin 2\varphi \end{pmatrix}$$

s" ist:

$$\underline{s}''(\varphi) = \frac{\underline{S\Pi} - \underline{f}}{|\underline{S\Pi} - \underline{f}|} \longrightarrow \begin{pmatrix} x_c \\ y_c \end{pmatrix} - \begin{pmatrix} 0 \\ y_f \end{pmatrix} + R_m \begin{pmatrix} \sin\varphi \\ -\cos\varphi \end{pmatrix} + k \begin{pmatrix} -\sin 2\varphi \\ \cos 2\varphi \end{pmatrix}$$

$$\longrightarrow \sqrt{(x_c + R_m \sin\varphi - k \sin 2\varphi)^2 + (y_c - y_f - R_m \cos\varphi + k \cos 2\varphi)^2} = \sqrt{\cdots}$$

Die Wurzel im Nenner der Gleichung für $\underline{s}''$, abgekürzt $= \sqrt{\cdots}$ wird nicht mehr weiter analytisch aufgelöst.

Nun sind $\underline{s}'$; $\underline{s}''$ und $\underline{t}_{SM}(\varphi)$ berechnet, können also in $\underline{s}' \cdot \underline{t}_{SM}(\varphi) = \underline{s}'' \cdot \underline{t}_{SM}(\varphi)$ eingesetzt werden.

Es ergibt sich, dass

$$\underline{s}' \cdot \underline{t}_{SM} = -\sin 2\varphi \left( R_m \cos\varphi + \frac{dk}{d\varphi} \cdot -\sin 2\varphi + 2k \cdot -\cos 2\varphi \right) +$$

$$+ \cos 2\varphi \left( R_m \sin\varphi + \frac{dk}{d\varphi} \cdot \cos 2\varphi + 2k \cdot -\sin 2\varphi \right) =$$

$$= R_m \cdot \underbrace{(-\sin 2\varphi \cos\varphi + \cos 2\varphi \sin\varphi)}_{= \sin(-2\varphi + \varphi) = -\sin(\varphi)} + \frac{dk}{d\varphi} \underbrace{(\sin^2 2\varphi + \cos^2 2\varphi)}_{1} + 2k \cdot \underbrace{(\sin 2\varphi \cos 2\varphi - \sin 2\varphi \cos 2\varphi)}_{\varnothing}$$

$$\underline{s}' \cdot \underline{t}_{SM} = \frac{dk}{d\varphi} - R_m \sin\varphi$$

und dass

$$\underline{s}'' \cdot \underline{t}_{SM} = \frac{1}{\sqrt{...}} \cdot \left\{ \left( R_m \cos\varphi + \frac{dk}{d\varphi} - \sin 2\varphi + 2k \cdot - \cos 2\varphi \right)\left( x_c + R_m \sin\varphi + k \cdot - \sin 2\varphi \right) + \right.$$
$$\left. + \left( R_m \sin\varphi + \frac{dk}{d\varphi} \cdot \cos 2\varphi + 2k \cdot - \sin 2\varphi \right)\left( y_c - y_p + R_m \cdot - \cos\varphi + k \cos 2\varphi \right) \right\}$$

werden die oben erhaltenen Werte für $\underline{s}' \cdot \underline{t}_{SM}(\varphi)$ und $\underline{s}'' \cdot \underline{t}_{SM}(\varphi)$ in die Gleichung $\underline{s}' \cdot \underline{t}_{SM}(\varphi) = \underline{s}'' \cdot \underline{t}_{SM}(\varphi)$ eingesetzt und

diese nach dk / dφ aufgelöst, ergibt sich ein wegen $\sqrt{...}$ elliptischer Ausdruck der analytisch nur aufwendig integrierbar ist.

Einsprechend wird die oben erhaltene Funktion

$$\frac{dk}{d\varphi} = F(., k, \varphi)$$

in noch einer weiteren bevorzugten Ausführungsform als K = k(φ) numerisch bestimmt. Der Fachmann kann dies durch das Programm mathcad der Firma mathsoft ohne weiteres tun.

Die erhaltenen Werte für k(φ) können dann in $\underline{SM}(\varphi)$ eingesetzt und dadurch die Form des Sekundärkonzentrators 40,65 durch eine Linie von Punkten bestimmt werden. Z.B. die Methode der kleinsten Quadrate liefert dann eine kontinuierliche Form, die der idealen Form mit der ansteigenden Anzahl der bestimmten Punkte $\underline{SM}(\varphi)$ (bzw. kleiner werdendem Intervall für $\Delta(\varphi)$ immer näher kommt.

Der Fachmann kann nun wählen, ob die oben erwähnte Linie von Punkten mit grösserem oder kleinerem $\Delta\varphi$ bestimmt wird, d.h. ob die Punkte weniger eng oder enger zusammen liegen, so dass ein Brennlinienbereich oder eine exakte Brennlinie am Ort des Absorberröhrs 42,64 entsteht. Dadurch kann er im konkreten Fall die oben in Zusammenhang mit Figur 3 beschriebene Temperaturverteilung auf dem Absorberrohr im gewünschten Sinn beeinflussen.

Wegen des Durchmessers der Sonnenscheibe gelangen die Sonnenstrahlen 31 nicht nur parallel auf den Konzentrator 32,62, sondern mit einem Öffnungswinkel von ca. 0,5 Grad. Entsprechend kann über das oben beschriebene Verfahren z.B. die Form des Sekundärkonzentrators 40,65 je für einen Einheitsverktor $\underline{s}$ bestimmt werden, der parallel zur y-Achse verläuft, und für einen Einheitsvektor $\underline{s}$, der um 0,25 Grad nach links und nach rechts zur y-Achse geneigt ist. Es ergeben sich dann drei Formen für den Sekundärkonzentrator 40,65, respektive ein Bereich, in dem dessen Oberfläche liegen soll, in welchem eine Optimierung vorgenommen werden kann.

Bei einer bevorzugten Ausführungsform werden zur Vereinfachung die einfallenden Sonnenstrahlen als parallel angenommen, wobei sie besonders bevorzugt parallel zur Mittel-Symmetrieebene des Konzentrators 32,62 liegen.

Das oben angegebene Verfahren erlaubt, den Einheitsvektor $\underline{s}'$ auch bei nicht kreisbogenförmigem Konzentrator anzugeben, z.B. dann, wenn dieser Parabelförmig ausgebildet ist. Bei einem weiteren bevorzugten Ausführungsbeispiel wird jedoch der Konzentrator 32,62 im Querschnitt als bogenförmig angenommen.

Bei noch einer weiteren bevorzugten Ausführungsform des erfindungsgemässen Herstellverfahrens wird der Ursprung des Koordinatensystems im Krümmungsmittelpunkt $\underline{C}$ des Konzentrators 32,62 angenommen.

Ist die Form der reflektierenden Oberfläche Sekundärkonzentrators 40,65 einmal bestimmt, kann sie auf den Sekundärkonzentrator übertragen werden, vorzugsweise auf einen Block aus geeignetem Schaumstoff, der den Körper des Sekundärkonzentrators bildet, worauf die dann der Kurve entsprechend bearbeitete Oberfläche des Schaumstoffs mit einer reflektierenden Folie bedeckt, und so ein in den Rinnenkollektor einbaufähiger Sekundärkonzentrator 40,65 hergestellt wird. Besonders bevorzugt besitzen solche Schaumstoffblöcke eine einheitliche Länge von z.B. 2m und werden dann für die zu bestückenden Rinnenkollektoren zusammengesetzt eingebaut.

Damit ergibt sich ein betriebsfähiger Sekundärkonzetrator 40,65, der auf einen vorgegebenen Konzentrator 32,62 sowie ein vorgegebenes Absorberrohr 42,64 abgestimmt ist. Obschon solch ein Sekundärkonzentrator 40,65 für den Einbau in eine Druckzelle besonders geeignet ist, kann er natürlich auch ohne Druckzelle in konventionellen Rinnenkollektoren Verwendung finden (z.B. im Hinblick auf den oben erwähnten, verkürzten Strahlengang). Ebenso kann das erfindungsgemässe Verfahren z.B. in Dish-Sterling Kollektoren mit rundem (und nicht rinnenförmigem) Konzentrator eingesetzt werden, wenn die Strahlung durch ein Loch im Konzentrator auf einen Punkt konzentriert werden soll, der hinter dem Konzentrator liegt.

**Patentansprüche**

1. Rinnenkollektor für ein Solarkraftwerk mit einem in einer Druckzelle (10,25,70) druckbeaufschlagbar angeordneten, als flexible Membran ausgebildeten Konzentrator, der unter Betriebsdruck in die Druckzelle (10,25,70) einfallende Sonnenstrahlung (30,31) gegen einen Brennlinienbereich (34) konzentriert, und mit einer Absorberleitung (42,64) zur Absorption der konzentrierten Sonnenstrahlung (30'',31''), wobei die Absorberleitung (42,64) in der Druckzelle (10,25,70) angeordnet ist, und weiter innerhalb der Druckzelle (10,25,70) ein Sekundärkonzentrator (40,54,65) vorgesehen ist, der im Pfad der sich konzentrierenden Strahlung (30',31') liegt und derart ausgebildet ist, dass die konzentrierte Strahlung (30',31') weiter, gegen einen sekundären Brennlinienbereich oder eine sekundäre Brennlinie am Ort der Absorberleitung (42,64) hin, konzentriert wird, **dadurch gekennzeichnet, dass** der Brennlinienbereich ausserhalb der Druckzelle (10, 25, 70) liegt.

2. Rinnenkollektor nach Anspruch 1 , wobei die mindestens teilweise aus einer flexiblen Membran gebildete Druckzelle (10,25,70) einen für zu reflektierende Sonnenstrahlung (30,31) transparenten Bereich aufweist, der Konzentrator (33,60,71) eine dem transparenten Bereich zugewendete, die Sonnenstrahlung (30,31) reflektierende Seite (74) und eine der Strahlung (30,31) abgewandte Seite (75) aufweist, zugleich die Druckzelle (10,25,70) in einen 1. Druckraum (72) und in einen 2. Druckraum (73) unterteilt, und wobei als Ventilatoren (78,80) ausgebildete Mittel vorgesehen sind, in den Druckräumen (72,73) betriebsfähig Druck je in einem vorbestimmten Mass zu erzeugen und zu halten, wenn im Betrieb das Volumen eines oder beider Druckräume (72,73) durch äussere Einflüsse verändert wird.

3. Rinnenkollektor nach Anspruch 1 oder 2, wobei der vorbestimmte Differenzdruck kleiner ist als 0.5 mbar, vorzugsweise in einem Bereich von 0.05 bis 0.2 mbar, und besonders bevorzugt im Bereich von 0.05 bis 0.1 mbar liegt, und/oder der Sekundärkonzentrator (40,54,65) dem Konzentrator (33,60,71) gegenüberliegend, nahe der Membran (26) mit dem für Sonnenstrahlung (30,31) transparenten Bereich angeordnet ist, und wobei die Absorberleitung (42,64) zwischen dem Konzentrator (33,60,71) und dem Sekundärkonzentrator (40,54,65) verläuft.

4. Rinnenkollektor nach einem der Ansprüche 1 bis 3 , wobei die Absorberleitung (64) einen Mantel (77), der die Wärmeabgabe nach aussen reduziert, und eine im Mantel (77) längs verlaufende thermische Öffnung (72) aufweist, welche Öffnung (72) den Durchtritt vom Sekundärkonzentrator (40,54,65) weiter konzentrierter Sonnenstrahlung (30,31) durch den Mantel (77) hindurch in einen Innenraum (73) der Absorberleitung (42,64) erlaubt, wobei die Absorberleitung (64) weiter derart ausgebildet ist, dass ein Wärme transportierendes Fluid zwischen dem Mantel (77) und dem Innenraum (73) zirkulieren und so die durch die thermische Öffnung (72) eingefallene Strahlungswärme abtransportieren kann.

5. Rinnenkollektor nach Anspruch 1, wobei der Konzentrator (33,51,60,71) und der Sekundärkonzentrator (40,54,65) je in zwei längsverlaufende, je zu einander symmetrische Bereiche aufgeteilt sind.

6. Verfahren zur Herstellung eines Rinnenkollektors nach Anspruch 1, das die folgenden Schritte zur Bestimmung der Form der reflektierenden Oberfläche des Sekundärkonzentrators umfasst:

   ▪ annehmen mindestens einer Querschnittsebene des Sekundärkonzentrators, wobei in dieser wie folgt verfahren wird:

      ▪ bestimmen des Einheitsvektors $\underline{s}(\varphi)$ des einfallenden Sonnenstrahls
      ▪ bestimmen des Einheitsvektors $\underline{s}'(\varphi)$ des am Konzentrator reflektierten Sonnenstrahls
      ▪ annehmen eines Einheitsvektors $\underline{s}''(\varphi)$ des am Sekundärkonzentrator reflektierten Sonnenstrahls
      ▪ bestimmen einer Anzahl von Punkten $\underline{SM}(\varphi)$ auf dem Sekundärkonzentrator über den Vektor $\underline{PM}(\varphi)$, wobei $\underline{PM}(\varphi)$ auf dem Konzentrator liegt, und wobei $\underline{SM}(\varphi) = \underline{PM}(\varphi) + k \cdot \underline{s}'(\varphi)$
      ▪ bestimmen des Faktors k derart, dass $\underline{s}''(\varphi)$ durch den vorbestimmen Brennpunkt oder der Brennlinie $\underline{F}$ der aus dem Konzentrator und dem Sekundärkonzentrator bestehenden Anordnung geht
      ▪ bestimmen der Kurve, und damit der gesuchten Form der reflektierenden Oberfläche, die durch die erhaltene Anzahl von Punkten $\underline{SM}(\varphi)$ geht
      ▪ übertragen der unter Anwendung der vorgehenden Schritte erhaltenen Kurve auf den Sekundärkonzentrator zur Ausbildung dessen reflektierender Oberfläche.

7. Verfahren nach Anspruch 6, indem der Faktor k durch die Gleichsetzung der Skalarprodukte

$$\underline{s}' \cdot \underline{t}(\varphi) = \underline{s}'' \cdot \underline{t}(\varphi)$$

bestimmt wird, wobei $\underline{t}(\varphi)$ die im Punkt $\underline{SM}(\varphi)$ an den Sekundärkonzentrator angelegte Tangente ist und bevorzugt die Gleichung

$$\underline{s}' \cdot \underline{t}(\varphi) = \underline{s}'' \cdot \underline{t}(\varphi)$$

nach dk/dφ aufgelöst und die Werte von k aus dem entstehenden elliptischen Integral numerisch bestimmt werden.

8. Verfahren nach einem der vorangehenden Ansprüche 6 bis 7, wobei zur Vereinfachung die einfallenden Sonnenstrahlen 31 als parallel angenommen werden und/oder der Konzentrator im Querschnitt als bogenförmig angenommen wird.

9. Verfahren nach einem der vorangehenden Ansprüche 6 bis 8, wobei der Ursprung des Koordinatensystems im Krümmungsmittelpunkt des Konzentrators angenommen wird.

10. Verfahren nach einem der vorangehenden Ansprüche 6 bis 9, wobei die Kurve durch die erhaltenen Punkte $\underline{SM}(\varphi)$ durch die Methode der kleinsten Quadrate bestimmt wird.

11. Verfahren nach einem der vorangehenden Ansprüche 6 bis 10, wobei die Kurve auf einen Schaumstoffblock übertragen und die so entstehende gekrümmte Oberfläche mit einer reflektierenden Folie bedeckt wird.

**Claims**

1. A trough collector for a solar power plant with a concentrator designed as a flexible membrane, arranged in a pressure cell (10, 25, 70) such that it can be pressurised, which at operating pressure concentrates solar radiation (30, 31) incident on the pressure cell (10, 25, 70) onto a focal line region (34), and with an absorber tube (42, 64) to absorb the concentrated solar radiation (30", 31"), wherein the absorber tube (42, 64) is arranged in the pressure cell (10, 25, 70), and a secondary concentrator (40, 54, 65) is provided further within the pressure cell (10, 25, 70), which is located in the path of the concentrated radiation (30' ,31') and is designed such that the concentrated radiation (30', 31') is further concentrated onto a secondary focal line region, or a secondary focal line at the site of the absorber tube (42, 64), **characterised in that**, the focal line region is located outside the pressure cell (10, 25, 70).

2. The trough collector according to claim 1, wherein the pressure cell (10, 25, 70), formed at least partially from a flexible membrane, has a transparent region for the solar radiation (30, 31) to be reflected, the concentrator (33, 60, 71) has one side (74) facing towards the transparent region and reflecting the solar radiation (30, 31), and one side (75) facing away from the radiation (30, 31), at the same time it divides the pressure cell (10, 25, 70) into a first pressure chamber (72) and a second pressure chamber (73), and wherein agents designed as ventilators (78, 80) are provided, to generate and maintain operational pressure in each of the pressure chambers (72, 73) at a predetermined level, if in operation the volume of one or both pressure chambers (72, 73) is altered as a result of external influences.

3. The trough collector according to claim 1 or 2, wherein the predetermined differential pressure is less than 0.5 mbar, preferably lies in a range from 0.05 to 0.2 mbar, and particularly preferably lies in a range from 0.05 to 0.1 mbar, and/or the secondary concentrator (40, 54, 65) is arranged opposite the concentrator (33, 60, 71), near the membrane (26) with the transparent region for solar radiation (30, 31), and wherein the absorber tube (42, 64) runs between the concentrator (33, 60, 71) and the secondary concentrator (40, 54, 65).

4. The trough collector according to one of the claims 1 to 3, wherein the absorber tube (64) has a cover (77), which reduces the heat loss to the external environment, and a thermal opening (72) running longitudinally in the cover (77), which opening (72) allows the passage of solar radiation (30, 31) further concentrated by the secondary collector (40, 54, 65) through the cover (77) into an interior (73) of the absorber tube (42, 64), wherein the absorber tube (64) is further designed such that a heat transporting fluid can circulate between the cover (77) and the interior (73), and can thus remove radiant heat incident through the thermal opening (72).

5. The trough collector according to claim 1, wherein the concentrator (33, 51, 60, 71) and the secondary concentrator (40, 54, 65) are both divided into two longitudinal regions that in each case are symmetrical with respect to one another.

6. A method for the manufacture of a trough collector according to claim 1, which comprises the following steps for purposes of determining the shape of the reflecting surface of the secondary concentrator:

- adoption of at least one cross-sectional plane of the secondary collector, wherein in the latter the method proceeds as follows:
- determination of the unit vector $\underline{s}(\varphi)$ of the incident solar ray
- determination of the unit vector $\underline{s}'(\varphi)$ of the solar ray reflected from the concentrator
- adoption of a unit vector $\underline{s}''(\varphi)$ of the solar ray reflected from the secondary concentrator
- determination of a number of points $\underline{SM}(\varphi)$ on the secondary concentrator by means of the vector $\underline{PM}(\varphi)$, wherein $\underline{PM}(\varphi)$ lies on the concentrator, and wherein $\underline{SM}(\varphi) = \underline{PM}(\varphi) + k \cdot \underline{s}'(\varphi)$
- determination of the factor k such that $\underline{s}''(\varphi)$ passes through the predetermined focal point or the focal line F of the arrangement consisting of the concentrator and the secondary concentrator
- determination of the curve, and thus the desired shape of the reflecting surface, which passes through the number of points $\underline{SM}(\varphi)$ obtained
- transfer of the curve obtained by the application of the previous steps onto the secondary collector for purposes of designing the latter's reflecting surface.

7. The method according to Claim 6, in which the factor k is determined by the equation of the scalar products

$$\underline{s}' \ \underline{t}(\varphi) \ = \ \underline{s}'' \ \underline{t}(\varphi)$$

wherein $\underline{t}(\varphi)$ is the tangent at the point $\underline{SM}(\varphi)$ on the secondary concentrator, and the equation

$$\underline{s}' \ \underline{t}(\varphi) \ = \ \underline{s}'' \ \underline{t}(\varphi)$$

is preferably solved for $dk/d\varphi$, and the values of k are numerically determined from the resulting elliptical integral.

8. The method according to one of the preceding claims 6 to 7, wherein for purposes of simplification the incident solar rays (31) are assumed to be parallel, and/or the concentrator is assumed to be arcuate in cross-section.

9. The method according to one of the preceding claims 6 to 8, wherein the origin of the coordinates system is assumed to be at the centre of curvature of the concentrator.

10. The method according to one of the preceding claims 6 to 9, wherein the curve through the points $\underline{SM}(\varphi)$ obtained is determined by the method of least squares.

11. The method according to one of the preceding claims 6 to 10, wherein the curve is transferred onto a foam block, and the curved surface thus resulting is covered with a reflecting foil.

**Revendications**

1. Capteur cylindro-parabolique pour une centrale solaire avec un concentrateur réalisé en tant que membrane flexible disposé de manière à pouvoir être mis sous pression dans une cellule sous pression (10, 25, 70) lequel, sous pression de service, concentre un rayonnement solaire (30, 31) incident dans la cellule sous pression (10, 25, 70) vers une zone de ligne focale (34), et avec un conduit absorbeur (42, 64) pour absorber le rayonnement solaire (30'', 31') concentré, dans lequel le conduit absorbeur (42, 64) est disposé dans la cellule sous pression (10, 25, 70) et un concentrateur secondaire (40, 54, 65) étant en outre prévu à l'intérieur de la cellule sous pression (10, 25, 70), lequel se situe sur le trajet du rayonnement (30', 31') se concentrant et est réalisé de manière à ce que le rayonnement concentré (30', 31') soit davantage concentré vers une zone de ligne focale secondaire ou une ligne focale secondaire sur le lieu du conduit absorbeur (42, 64), **caractérisé en ce que** la zone de ligne focale se situe en-dehors de la cellule sous pression (10, 25, 70).

**2.** Capteur cylindro-parabolique selon la revendication 1, dans lequel la cellule sous pression (10, 25, 70) se composant au moins partiellement d'une membrane flexible présente une zone transparente pour un rayonnement solaire (30, 31) à réfléchir, le concentrateur (33, 60, 71) présentant un côté (74) réfléchissant le rayonnement solaire (30, 31) tourné vers la zone transparente et un côté (75) tournant le dos au rayonnement solaire (30, 31), la cellule sous pression (10, 25, 70) étant en même temps subdivisée en une première chambre de pression (72) et une deuxième chambre de pression (73), et dans lequel on prévoit des moyens réalisés en tant que ventilateurs (78, 80) afin de générer, et maintenir dans les chambres de pression (72, 73), une pression à un degré respectivement prédéfini de manière à pouvoir fonctionner lorsque, lors du fonctionnement, le volume de l'une des chambres de pression (72, 73) ou des deux d'entre elles est modifié du fait d'influences extérieures.

**3.** Capteur cylindro-parabolique selon la revendication 1 ou 2, dans lequel la pression différentielle prédéfinie est inférieure à 0,5 mbars, se situe de préférence dans la plage de 0,05 à 0,2 mbars, et de manière particulièrement préférée dans la plage de 0,05 à 0,1 mbars, et/ou le concentrateur secondaire (40, 54, 65) étant disposé de manière situé en vis-à-vis du concentrateur (33, 60, 71), à proximité de la membrane (26) avec la zone transparente pour le rayonnement solaire (30, 31), et dans lequel le conduit absorbeur (42, 64) s'étend entre le concentrateur (33, 60, 71) et le concentrateur secondaire (40, 54, 65).

**4.** Capteur cylindro-parabolique selon l'une des revendications 1 à 3, dans lequel le conduit absorbeur (64) présente une enveloppe (77) qui réduit la diffusion de chaleur vers l'extérieur et une ouverture thermique (72) s'étendant longitudinalement dans l'enveloppe (77), laquelle ouverture (72) permet le passage d'un rayonnement solaire (30, 31) davantage concentré par le concentrateur secondaire (40, 54, 65) à travers l'enveloppe (77) jusque dans un espace intérieur (73) du conduit absorbeur (42, 64), dans lequel le conduit absorbeur (64) est par ailleurs réalisé de manière à ce qu'un fluide caloporteur puisse circuler entre l'enveloppe (77) et l'espace intérieur (73) et ainsi évacuer la chaleur du rayonnement incidente à travers l'ouverture thermique (72).

**5.** Capteur cylindro-parabolique selon la revendication 1, dans lequel le concentrateur (33, 51, 60, 71) et le concentrateur secondaire (40, 54, 65) sont respectivement partagés en deux zones symétriques l'une de l'autre s'étendant longitudinalement.

**6.** Procédé pour la fabrication d'un capteur cylindro-parabolique selon la revendication 1, lequel comprend les étapes suivantes pour déterminer la forme de la surface réfléchissante du concentrateur secondaire :

- la supposition d'au moins un plan en coupe transversale du concentrateur secondaire dans lequel on procède de la manière qui suit :
- la détermination du vecteur unitaire $\underline{s}(\varphi)$ du rayonnement solaire incident,
- la détermination du vecteur unitaire $\underline{s}'(\varphi)$ du rayonnement solaire réfléchi au niveau de concentrateur,
- la supposition d'un vecteur unitaire $\underline{s}''(\varphi)$ du rayonnement solaire réfléchi au niveau du concentrateur secondaire,
- la détermination d'un certain nombre de points $\underline{SM}(\varphi)$ sur le concentrateur secondaire via le vecteur $\underline{PM}(\varphi)$, où $\underline{PM}(\varphi)$ se situe sur le concentrateur, et où $\underline{SM}(\varphi) = \underline{PM}(\varphi) + k \cdot \underline{s}'(\varphi)$,
- la détermination du facteur k de manière à ce que $\underline{s}''(\varphi)$ passe par le point focal ou la ligne focale $\underline{F}$ de l'agencement se composant du concentrateur et du concentrateur secondaire,
- la détermination de la courbe, et ainsi de la forme recherchée de la surface réfléchissante, laquelle passe par le nombre de points $\underline{SM}(\varphi)$ obtenus,
- le transfert de la courbe obtenue, en faisant appel aux étapes précédentes, sur le concentrateur secondaire pour la formation de la surface réfléchissante de celui-ci.

**7.** Procédé selon la revendication 6, dans lequel le facteur k est déterminé en égalant entre eux les produits scalaires

$$\underline{s}' \cdot \underline{t}(\varphi) = \underline{s}'' \cdot \underline{t}(\varphi)$$

où **t(**φ**)** est la tangente appliquée au concentrateur secondaire au point **SM(**φ**),** et où l'équation

$$\underline{s}' \cdot \underline{t}(\varphi) = \underline{s}'' \cdot \underline{t}(\varphi)$$

est de préférence résolue afin d'en extraire dk/dφ, et les valeurs de k étant déterminées numériquement à partir de l'intégrale elliptique obtenue.

8. Procédé selon l'une des revendications 6 à 7 précédentes, dans lequel, pour la simplification, les rayons solaires incidents (31) sont supposés être parallèles et/ou le concentrateur étant supposé avoir une forme en arc en coupe transversale.

9. Procédé selon l'une des revendications 6 à 8 précédentes, dans lequel l'origine du système de coordonnées est supposée être au centre de courbure du concentrateur.

10. Procédé selon l'une des revendications 6 à 9 précédentes, dans lequel la courbe passant par les points $\underline{SM}(\varphi)$ est déterminée grâce à la méthode des moindres carrés.

11. Procédé selon l'une des revendications 6 à 10 précédentes, dans lequel la courbe est transférée sur un bloc en mousse et la surface courbe ainsi obtenue étant recouverte d'une feuille réfléchissante.

**Fig.** 1

Fig 2

Fig. 3

Fig. 4

EP 2 304 334 B1

Fig 5

70

72

30', 31''

76

75

73

77

Fig 6

Fig 4

**EP 2 304 334 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- FR PS1319144
- FR PS2362347
- WO 9010182 A
- US 5365920 A
- DE OS2733915 A
- FR PS2398982
- CH 2007000480 W